# EUROPEAN PATENT SPECIFICATION

(11) **EP 2 174 032 B1**
(45) Date of publication and mention of the grant of the patent: **12.03.2014**
(21) Application number: 07768422.3
(22) Date of filing: 10.07.2007
(51) Int. Cl.: F16D 41/07

(54) **ONE-WAY CLUTCH OF SPRAG TYPE**
FREILAUFKLEMMKÖRPERKUPPLUNG
EMBRAYAGE UNIDIRECTIONNEL DU TYPE À GALET

(43) Date of publication of application: 14.04.2010
(73) Proprietor: NSK-WARNER K.K., Tokyo 141-0032 (JP)
(72) Inventor: SUZUKI, Yukiyoshi, Fukuroi-shi Shizuoka 437-8545 (JP); KAWAI, Tsutomu, Fukuroi-shi Shizuoka 437-8545 (JP)
(74) Representative: Jones, Nicolas Guy
(86) International application number: PCT/JP2007/064045
(87) International publication number: WO 2009/008093

(56) References cited:
- DE-B- 1 199 066
- FR-A- 978 773
- JP-A- 6 193 657

## Description

### TECHNICAL FIELD

The present invention relates to a one-way clutch of sprag type, embodiments of which may for example be used in vehicles and the like.

### BACKGROUND ART

In general, a one-way clutch of sprag-type comprises an outer race, an inner race rotatable relative to the outer race, and sprags as torque transmitting members for transmitting torque between the outer race and the inner race. As the inner and outer races are rotated relative to each other, the sprags are engaged with an outer peripheral surface of the inner race and/or an inner peripheral surface of the outer race, thereby transmitting the torque between the inner and outer races.

Further, in the one-way clutches of sprag-type, generally, a cam surface of the sprag is designed in such a manner that a center of a radius of curvature of an outer cam surface is deviated from a center of a radius of curvature of an inner cam surface so that, as the sprag is rotated in an engaging direction, a height of the sprag is increased.

In this case, the sprag must satisfy a relationship, µ > tan α, required for the engagement, where µ is coefficient of friction and a is a strut angle. A method for measuring such a strut angle is disclosed in Japanese Patent Application Laid-Open No. H02-206713.

Engine oil includes an extreme-pressure additive such as organic molybdenum. Thus, the engine oil has low coefficient of friction. Accordingly, in the engagement of the one-way clutch, the relationship between the coefficient of friction µ and the strut angle α becomes tan a > µ, with the result that slip is generated between the sprag and the inner race and the sprag cannot be engaged by the inner race. As a result, the engaging function of the one-way clutch may not be achieved.

Further, in a case where the one-way clutch is used under severe engine vibration, particularly, during an idle rotation, there may cause a problem regarding wear of the inner diameter side of the sprag.

Document DE 1199066 discloses a one-way clutch according to the preamble of claim 1.

### DISCLOSURE OF THE INVENTION

Accordingly, an object of embodiments of the present invention is to provide a one-way clutch of sprag type capable of maintaining a reliable engaging ability even under a condition in which engine vibration is severe and a lubricating condition in which a coefficient of friction of an extreme-pressure additive in engine oil is low.

According to a first aspect of the present invention, there is provided a one-way clutch of sprag type according to claim 1.

A preferable feature according to the first aspect is set out in claim 2.

According to a second aspect of the present invention, there is provided a one-way clutch of sprag type according to claim 3.

According to embodiments of the present invention, the following effects can be obtained.

By selecting the strut angle at the sprag height represented by "initial engaging height of sprag = (a diameter of the inner peripheral track surface of the outer race - a diameter of the outer peripheral track surface of the inner race)/2" to be 1.2 to 1.8° and by selecting the strut angle in a normal engaging area (torque load) to become smaller than 3°, even in an environment in which lubricating oil including extreme-pressure agent and having low coefficient of friction is used, a reliable one-way clutch of sprag type which provides positive engagement can be provided.

In the specification, methods for measuring the height of the sprag and the strut angle are performed in accordance with methods described in FIG. 1 of the above-mentioned Japanese Patent Application Laid-Open No. H02-206713. In the present invention, the strut angle is 1.2° to 1.8° at the initial engaging height of the sprag and according to an embodiment is smaller than 3° in the normal engaging area (torque load). If the strut angle is too small, torque in the engaging direction cannot be obtained, and thus, the one-way clutch cannot function.

Further, by designing the sprag so that a radial dimension or distance from centers of an outer diameter side cam surface and an inner diameter side cam surface of the cam configuration to the cam surface, in an idle rotation area where the height of the sprag is smaller than the initial engaging height, becomes smaller than a radial dimension from centers to the cam surface constituting the outer diameter side cam surface and the inner diameter side cam surface in an engaging area where the height of the sprag is greater than the initial engaging height, since an allowable eccentric amount of the sprag can be increased, wear of the sprag and the inner race can be prevented. When the sprag is inclined toward the idle rotation side by a maximum value, since a space between the track surface of the inner race and the sprag can be increased, even if an eccentric load is applied, the sprag can be inclined, with the result that the sprag can escape from the excessive load applied from the inner peripheral track surface of the outer race or the outer peripheral track surface of the inner race.

Further features of the present invention will become apparent from the following description of exemplary embodiments with reference to the attached drawings.

### BRIEF DESCRIPTION OF THE DRAWINGS

FIG. 1 is an axial partial sectional view of a one-way clutch of sprag type according to an embodiment of the present invention;
FIG. 2 is a front view of a sprag shown in FIG. 1; and
FIG. 3 is a graph showing a curve representing a strut angle of the sprag measured in a parallel plane.

### BEST MODE FOR CARRYING OUT THE INVENTION

Now, embodiments of the present invention will be explained with reference to the accompanying drawings. Incidentally, it should be understood that embodiments which will be described later are merely exemplary and do not limit the present invention in all senses.

Hereinbelow, the embodiments of the present invention will be fully described with reference to the accompanying drawings. Incidentally, in the drawings, the same elements are designated by the same reference numerals. Further, it should be noted that the embodiments are merely illustrative examples and do not limit the present invention.

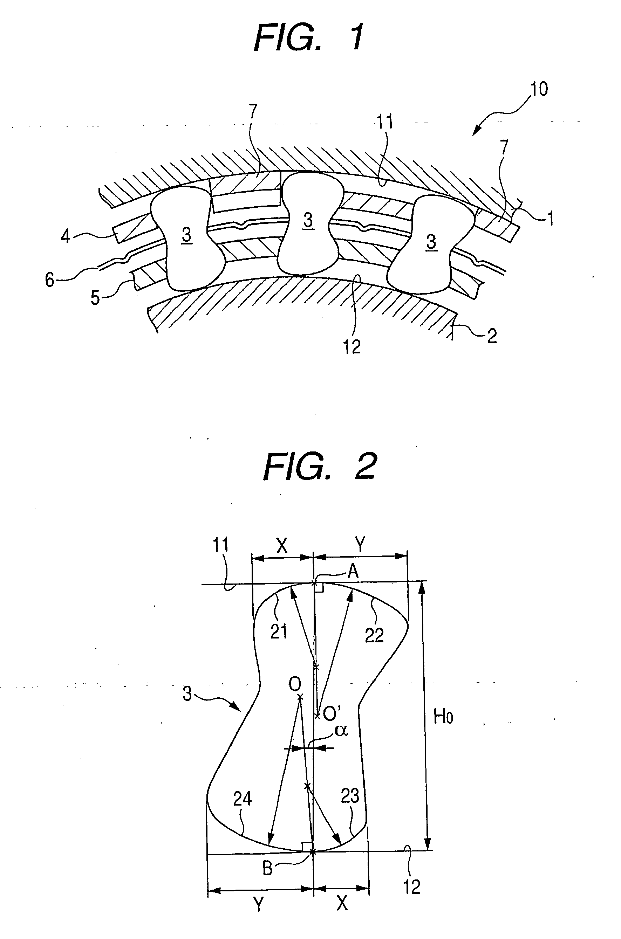

FIG. 1 is an axial partial sectional view of a one-way clutch 10 of sprag type according to an embodiment of the present invention. The one-way clutch 10 comprises an outer race 1 having an inner peripheral track surface 11, an inner race 2 rotatable relative to the outer race 1 and having an outer peripheral track surface 12, and a plurality of sprags 3 as torque transmitting members for transmitting torque between the outer race 1 and the inner race 2.

The sprags 3 are held by an outer cage 4 and an inner cage 5 which are disposed between the outer race 1 and the inner race 2. Further, a ribbon spring 6 is provided between the outer cage 4 and the inner cage 5, thereby providing cocking or rising moment for engaging each sprag with the outer peripheral track surface 12 of the inner race 2 to each sprag 3. Means 7 for applying friction forces to the outer race 1 are provided on the outer cage 4. For example, as the friction force applying means, a T-shaped bar, an i-bar obtained by bending a post portion of the cage and the like are known.

FIG. 2 is a front view of the sprag 3 of the one-way clutch 10 shown in FIG. 1. The sprag 3 has a gourd-shape in which the narrow parts are provided on both sides of the sprag at intermediate regions in a radial direction. Although different from the actual situation, for convenience sake of the explanation, FIG. 2 shows a condition that the inner peripheral track surface 11 of the outer race 1 is in parallel with the outer peripheral track surface 12 of the inner race 2.

The sprag 3 has cam surfaces 21 and 22 as curved surfaces having different radii and disposed on both sides of a contact point A where the inner peripheral track surface 11 is contacted with the sprag 3 (at the side of the outer race 1), and cam surfaces 23 and 24 as curved surfaces similarly having different radii and disposed on both sides of a contact point B where the outer peripheral track surface 12 is contacted with the sprag 3 (at the side of the inner race 2). In the illustrated embodiment, the radius of the cam surface 21 is substantially the same as the radius of the cam surface 23, and the radius of the cam surface 22 is substantially the same as the radius of the cam surface 24. Further, the radii of the cam surfaces 22 and 24 are greater than the radii of the cam surfaces 21 and 23.

The cam surface 21 at the outer diameter side of the sprag 3 corresponds to an area X (idle rotation area) where the height of the sprag 3 is smaller than an initial engaging height H₀ of the sprag, and the cam surface 22 corresponds to an area Y (engaging area) where the height of the sprag is greater than the initial engaging height H₀ of the sprag. Further, the cam surface 23 at the inner diameter side corresponds to the area X (idle rotation area) where the height of the sprag 3 is smaller than the initial engaging height H₀ of the sprag, and the cam surface 24 corresponds to the area Y (engaging area) where the height of the sprag is greater than the initial engaging height H₀ of the sprag.

In FIG. 2, an angle α formed between a straight line extending from the contact point A to the contact point B and a center 0 of the curved cam surface 24 is defined as a strut angle of the sprag 3. In the illustrated embodiment, the strut angle α at the initial engaging height H₀ of the sprag 3 is set to be smaller than 2° and be preferably greater than 1.2° and smaller than 1.8°.

Incidentally, in FIG. 2, an angle formed between the inner peripheral track surface 11 and a center O' of the cam surface 22, and an angle formed between the outer peripheral track surface 12 and the center O of the cam surface 24 are right angles (90° ), respectively. However, to facilitate the explanation, since the strut angle is shown exaggeratedly, such angles look to be slightly smaller than the right angles in FIG. 2.

In an engaging area of the sprag where the height of the sprag 3 is greater than the initial engaging height H₀ of the sprag 3 by about 0.1 mm, the strut angle is smaller than 3°.

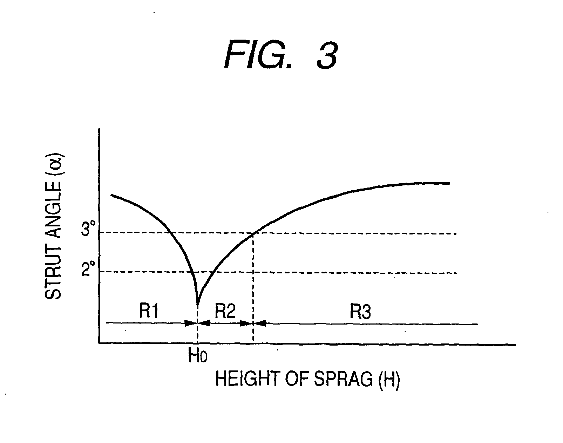

FIG. 3 is a graph showing a curve representing the strut angle measured in a parallel plane. The strut angle of the sprag 3 is shown as a strut angle with respect to the initial engaging height H₀ of the sprag 3, and FIG. 3 shows a representative strut angle curve according to the illustrated embodiment.

In general, in order to ensure that the sprag 3 does not generate slip, the strut angle α must be smaller and tan α must be smaller than coefficient of friction µ of steel; that is to say, a relationship tan α < µ must be satisfied. Further, if the strut angle is too small, since a torque capacity is reduced, the optimum strut angle must be achieved.

In FIG. 3, R1 shows an idle rotation area, and R2 and R3 show engaging areas. Among these areas, particularly, R2 shows the practical engaging area, which corresponds to the embodiment of the present invention. By setting the strut angle α in this way, a reliable engaging ability can be maintained even under a condition in which engine vibration is severe and a lubricating condition in which a coefficient of friction of an extreme-pressure additive in engine oil is low.

While an example that the one-way clutch of sprag type has both of the outer cage and the inner cage (one-way clutch of dual cage type) was explained, it should be noted that the present invention can also be applied to a one-way clutch of sprag type having a single cage. Further, the present invention can be applied to any one-way clutches having other sprags.

## Claims

1. A one-way clutch (10) of sprag type comprising:
outer (1) and inner (2) races spaced apart from each other in a radial direction and concentrically disposed to allow a relative rotation therebetween, said outer race (1) having an inner peripheral track surface (11), said inner race (2) being disposed within said outer (1) race and having an annular outer peripheral track surface (12);
a plurality of sprags (3) disposed between said outer race (1) and said inner race (2) and capable of transmitting torque between said inner peripheral track surface (11) of said outer race (1) and said outer peripheral track surface (12) of said inner race (2);
a cage (5) for holding said sprags (3); and
a spring (6) for biasing said sprags (3); and wherein
a strut angle (α) being defined between a straight line extending from the contact point (A), at which the inner peripheral track surface (11) is in contact with the sprag (3), to the contact point (B), at which the outer peripheral track surface (12) is in contact with the sprag (3), and a straight line forming a right angle to the outer peripheral track surface (12) at the contact point (B) at which the outer peripheral track surface is in contact with the sprag, **characterised in that** the strut angle (α) at an initial engaging height (H₀) of said sprag (3) is 1.2° to 1.8°.

2. A one-way clutch of sprag type according to claim 1, wherein, in an engaging area (Y) of said sprag (3) where a height of said sprag is greater than said initial engaging height (H₀) of said sprag by 0.1 mm, the strut angle (α) is smaller than 3°.

3. A one-way clutch of sprag type comprising;
a sprag (3) designed so that a radial dimension from centers of an outer diameter side cam surface (21) and an inner diameter side cam surface (23) of a cam configuration to the cam surface, in an idle rotation area (X) where a height of said sprag (3) is smaller than an initial engaging height (H₀), becomes smaller than a radial dimension from centers (o', o) to said cam surface constituting said outer diameter side cam surface (22) and said inner diameter side cam surface (24) in an engaging area (Y) where the height of said sprag is greater than the initial engaging height H₀.

## Patentansprüche

1. Freilauf (10) des Klemmkörpertyps umfassend:
äußere (1) und innere (2) Laufringe, die in einer radialen Richtung voneinander beabstandet und konzentrisch angeordnet sind, um dazwischen eine relative Drehung zu ermöglichen, wobei der äußere Laufring (1) eine innere außenumfängliche Spurfläche (11) aufweist, wobei der innere Laufring (2) innerhalb des äußeren (1) Laufrings angeordnet ist und eine ringförmige außenumfängliche Spurfläche (12) aufweist;
mehrere Klemmkörper (3), die zwischen dem äußeren Laufring (1) und inneren Laufring (2) angeordnet sind und in der Lage sind, ein Drehmoment zwischen der inneren außenumfänglichen Spurfläche (11) des äußeren Laufrings (1) und der außenumfänglichen Spurfläche (12) des inneren Laufrings zu übertragen;
einen Käfig (5) zum Aufnehmen der Klemmkörper (3); und
eine Feder (6) zum Vorspannen der Klemmkörper (3);
und wobei
ein Strebenwinkel (α) zwischen einer Geraden definiert wird, die sich vom Kontaktpunkt (A), an dem die innere außenumfängliche Spurfläche (11) in Kontakt mit dem Klemmkörper (3) ist, bis zum Kontaktpunkt (B) erstreckt, an dem die äußere außenumfängliche Spurfläche (12) in Kontakt mit dem Klemmkörper (3) ist, und eine Gerade einen rechten Winkel zur äußeren außenumfänglichen Spurfläche (12) am Kontaktpunkt (B) bildet, an dem die äußere außenumfängliche Spurfläche in Kontakt mit dem Klemmkörper ist, **dadurch gekennzeichnet, dass** der Strebenwinkel (α) bei einer ersten Eingriffshöhe (H₀) des Klemmkörpers (3) 1,2° bis 1.8° ist.

2. Freilauf des Klemmkörpertyps nach Anspruch 1, wobei, in einem Eingriffsbereich (Y) des Klemmkörpers (3), wo eine Höhe des Klemmkörpers um 0,1 mm größer als die erste Eingriffshöhe (H₀) des Klemmkörpers (3) ist, der Strebenwinkel (α) kleiner als 3° ist.

3. Freilauf des Klemmkörpertyps umfassend:
einen Klemmkörper (3), der so ausgebildet ist, dass eine radiale Abmessung von den Mittelpunkten einer äußeren Durchmesserseiten-Nockenfläche (21) und einer inneren Durchmesserseiten-Nockenfläche (23) einer Nockenkonfiguration zur Nockenfläche in einem Leerlaufdrehungsbereich (X), wobei eine Höhe des Klemmkörpers (3) kleiner als eine erste Eingriffshöhe (H₀) ist, kleiner wird als eine radiale Abmessung von den Mittelpunkten (0',0) zur Nockenfläche, die die äußere Durchmesserseiten-Nockenfläche (22) und innere Durchmesserseiten-Nockenfläche (24) in einem Eingriffsbereich (Y) darstellt, wobei die Höhe des Klemmkörpers größer als die erste Eingriffshöhe (H₀) ist.

## Revendications

1. Embrayage unidirectionnel (10) du type à roue libre, comprenant :
des pistes extérieure (1) et intérieure (2) espacées l'une de l'autre dans une direction radiale et disposées de façon concentrique de façon à permettre une rotation relative entre celles-ci, ladite piste extérieure (1) comportant une surface de piste périphérique intérieure (11), ladite piste intérieure (2) étant disposée à l'intérieur de ladite piste extérieure (1) et comportant une surface de piste périphérique extérieure annulaire (12) ;
une pluralité de galets (3) disposés entre ladite piste extérieure (1) et ladite piste intérieure (2), et susceptibles de transmettre un couple entre ladite surface de piste périphérique intérieure (11) de ladite piste extérieure (1) et ladite surface de piste périphérique extérieure (12) de ladite piste intérieure (2) ;
une cage (5) pour maintenir lesdits galets (3) ; et
un ressort (6) pour solliciter lesdits galets (3) ;
et dans lequel :
un angle d'entretoise (α) est défini entre une ligne droite s'étendant à partir du point de contact (A), auquel la surface de piste périphérique intérieure (11) est en contact avec le galet (3), jusqu'au point de contact (B), auquel la surface de piste périphérique extérieure (12) est en contact avec le galet (3), et une ligne droite formant un angle droit avec la surface de piste périphérique extérieure (12) au point de contact (B) auquel la surface de piste périphérique extérieure est en contact avec le galet, **caractérisé en ce que** l'angle d'entretoise (α), à une hauteur de prise initiale (H₀) dudit galet (3), est compris entre 1,2°et 1,8°.

2. Embrayage unidirectionnel du type à roue libre selon la revendication 1, dans lequel, dans une zone de prise (Y) dudit galet (3) où une hauteur dudit galet est supérieure de 0,1 mm à ladite hauteur de prise initiale (H₀) dudit galet, l'angle d'entretoise (α) est inférieur à 3°.

3. Embrayage unidirectionnel du type à roue libre, comprenant :
un galet (3) conçu de telle sorte qu'une dimension radiale de centres d'une surface de came de côté de diamètre extérieur (21) et d'une surface de came de côté de diamètre intérieur (23) d'une configuration de came à la surface de came, dans une zone de rotation en roue libre (X) où une hauteur dudit galet (3) est inférieure à une hauteur de prise initiale (H₀), devienne inférieure à une dimension radiale de centres (O', O) à ladite surface de came constituant ladite surface de came de côté de diamètre extérieur (22) et ladite surface de came de côté de diamètre intérieur (24) dans une zone de prise (Y) où la hauteur dudit galet est supérieure à la hauteur de prise initiale (H₀).
